Europäisches Patentamt

European Patent Office

Office européen des brevets

(11) Publication number: **0 497 056 A1**

# EUROPEAN PATENT APPLICATION

(21) Application number: **91311855.0**

(22) Date of filing: **20.12.91**

(51) Int. Cl.5: **C08F 8/36**

(30) Priority: **30.01.91 US 647981**

(43) Date of publication of application:
**05.08.92 Bulletin 92/32**

(84) Designated Contracting States:
**AT BE CH DE DK ES FR GB GR IT LI LU NL SE**

(71) Applicant: **NOVACOR CHEMICALS (INTERNATIONAL) S.A.**

**Fribourg, Canton of Fribourg(CH)**

(72) Inventor: **Bedell, Stanley**
**9 Hemlock Road**
**Andover, Massachusetts 01810(US)**
Inventor: **Nemphos, Speros P.**
**610D-Ridgefield**
**Clinton, Massachusetts 01510(US)**

(74) Representative: **Jukes, Herbert Lewis et al**
**Swann, Elt & Company 31 Beaumont Street**
**Oxford OX1 2NP(GB)**

(54) **Sulphonation process.**

(57) Crosslinked styrenic polymers may be sulphonated in a controlled manner in an organic solvent at elevated temperature using $SO_3$ in the presence of a trialkyl phosphate. The process does not introduce further crosslinking into the polymer permitting it to have an extremely high water uptake. The resulting polymer is useful as a hydrogel.

EP 0 497 056 A1

The present invention relates to the sulphonation of polymers. More particularly it relates to the sulphonation of crosslinked vinyl polymers., e.g. to give polymers useful as hydrogels.

Sulphonated polymers have been known for some time. Non-crosslinked sulphonated vinyl polymers have been known since at least the early nineteen sixties.

United States Patent 3,072,618 issued January 8, 1963 in the name of Albin F. Turback, assigned to Esso Research and Engineering, discloses a process for the sulphonation of non-crosslinked polystyrene. In fact the disclosure of the patent makes it clear that it is important to reduce the number of crosslinks to the smallest possible number (Col. 1, line 31). The object of U.S. patent 3,072,618 was to prepare water soluble polymers which would be useful as thickeners, impregnants, adhesives, soil conditioners and textile sizes.

Greek Patent 86.0636 in the names of G. Valkanas and P. Rigas issued March 18, 1986 discloses that polystyrene crosslinked by reaction with a di-alkylhalo aromatic compound in the presence of a Lewis Acid is useful in agricultural applications after it has been sulphonated. The Greek Patent discloses a process for sulphonation in which a gel of the crosslinked polystyrene is sulphonated with sulfuric acid. From a practical point of view such a process results in a significant amount of acid water which must be separated and treated before safe disposal. This is a disadvantage which needs to be overcome before the technology disclosed in the Greek Patent can be effectively commercialized.

The polymers disclosed in the Greek Patent are not water soluble as they are intended to stay in the ground to hold water in the soil.

The polymers disclosed in U. S. Patent 3,072,618 are intended to be water soluble. Interestingly applicants have discovered that the process designed for use with non-crosslinked polymers is also useful with crosslinked starting materials in accordance with the present invention.

United States Patent 4,209,592 issued June 24, 1980, assigned to Rohm and Haas Company discloses a process to manufacture ion exchange resin. In the process $SO_3$ is used both as a croslinking agent and as a sulphonating agent. Uncrosslinked polystyrene is reacted directly with $SO_3$ in an halogenated solvent. While the resulting polymer is a sulphonated crosslinked vinyl aromatic monomer it does not have the same water uptake as the polymers of the present invention. Particularly, the sulphonated croslinked vinyl aromatic polymers of the present should have a water up take of at least 15,000, preferably 20,000, most preferably 25,000 or greater weight % of water. It is clear from the examples of U.S. Patent the water uptake is below about 100 weight %.

U.S. Patent 4,448,935 issued May 15, 1984, assigned to National Starch and Chemical discloses a process for simultaneously crosslinking and sulphonating polystyrene. The patent contains a limitation that the process is conducted a low temperatures from 0 to 25°C. The process of the present invention operates a higher temperatures than those disclosed in the reference. The process of the present invention provides a controlled sulphonation process which may be carried out at elevated tempertures. Most importantly the process does not introduce a significant further amount of crosslinking into the crosslinked polymer.

Accordingly the present invention provides a process to produce a sulphonated crosslinked vinyl aromatic polymer having a water up take of not less than 150 times its weight (e.g. 15,000 weight %), characterised by

(a) swelling a crosslinked vinyl aromatic polymer in an organic solvent at temperature and pressure conditions so that said organic solvent remains a liquid;

(b) optionally separating the swollen insoluble crosslinked vinyl aromatic polymer from said organic solvent;

(c) contacting for a period of time from 10 minutes to 5 hours at a temperature greater than 30°C said swollen crosslinked vinyl aromatic polymer in said organic solvent with a mixture comprising a trialkyl phosphate and sulfur trioxide in a molar ratio from 1:1 to 1:4 the weight ratio of said sulfur trioxide to said crosslinked polymer being from 1:3 to 1: 0.5; and

(d) separating the resulting sulphonated crosslinked vinyl aromatic polymer from the solution of organic solvent and mixture of said trialkyl phosphate and said sulfur trioxide.

Vinyl polymers may contain aromatic rings. Preferred polymers are styrenic in nature. The polymers may be prepared in accordance with the teachings of the Greek Patent 86.0636 by dissolving polystyrene in a polar organic solvent then reacting the resulting solution with a di-alkylhalo aromatic compound in the presence of a Lewis Acid such as $SbCl_5$, $FeCl_3$ and $ZnCl_2$, preferably, $SbCl_5$. The details of the process are disclosed in the literature. e.g. "Crosslinking of Polystyrene by Mono and Difunctional Agents", Nikolaos A. Peppas and George N. Valkanas, Makromolekulare Chemie **62** (1977) 163; and "Friedal - Crafts Crosslinking of Polystyrene" N. Grassie and J. Gilks, Journal of Polymer Science: **Polymer Chemistry Edition**, Vol. 11, 1531-1552.

Polymers produced by such a process may be characterised as comprising polymers of $C_{8-2}$ vinyl aromatic monomers and optionally minor amounts of non-aromatic copolymerizable vinyl monomers well known to those skilled in the art of styrenic copolymer technology which have been crosslinked with a dialkylhalo aromatic compound in the presence of a lewis acid. The aromatic compound may be a benzene compound. The alkyl groups are generally $C_{1-4}$ alkyl radicals which are halogenated. Preferably the halogen atom is a chlorine atom. The aromatic compound may be further substituted by up to two $C_{1-4}$ alkyl radicals. Some dialkyl halo aromatic compounds are 1, 4-dichloromethyl benzene and 2, 5-dimethyl-1, 4-dichloromethyl benzene (also referred to as 2, 5 bis-(chloromethyl)-p-xylene).

It is also possible to produce crosslinked vinyl aromatic polymers by the direct polymerization of a monomer mixture comprising essentially one or more mono-vinyl aromatic monomers and one or more poly- or di-vinyl aromatic monomers. The system which is most well known is the production of crosslinked polystyrene by polymerizing styrene and a small amount of divinyl benzene or its analogues such as diisopropenyl benzene etc., or other crosslinking agents such as ethylene glycol dimethacrylate (EGDM) or PEGDM etc. The ratio of styrene to divinyl benzene may be from 97:3 to 99.95:0.05 preferably from 98:2 to 99.95:0.05, most preferably from 99:1 to 99.95:0.05.

Such polymers may be characterised as copolymers comprising from 95 to 99.9 most preferably from 98 to 99 weight % of one or more $C_{8-12}$ vinyl aromatic monomers which are unsubstituted or substituted by a $C_{1-4}$ alkyl radical or a chlorine atom and from 5, most preferably from 2 to 0.05 weight % of a divinyl aromatic monomer, or other known crosslinking agents.

It is pointed out in Greek Patent 86.0636 that other aromatic containing polymers may be crosslinked using a Lewis Acid in the presence of a dialkylhalo aromatic reactant. Some other polymers may be :

(a) copolymers comprising from 10 to 40 weight % of a copolymer comprising 40 to 60 weight % of one or more $C_{8-12}$ vinyl aromatic monomers which are unsubstituted or substituted by a $C_{1-4}$ alkyl radical or a chlorine atom and from 60 to 40 weight % of one or more $C_{3-8}$ vinyl nitriles which have been grafted onto from 90 to 60 weight % of a homopolymer of one or more $C_{4-6}$ conjugated diolefins; and

(b) copolymers comprising from 40 to 60 weight % of one or more $C_{8-12}$ vinyl aromatic monomers which are unsubstituted or substituted by a $C_{1-4}$ alkyl radical or a chlorine atom and from 60 to 40 weight % of one or more $C_{4-6}$ conjugated diolefins.

The polymers disclosed in the Greek Patent and e.g. the the following polymers may be used in accordance with the present invention:

(a) copolymers comprising from 90 to 60 weight % of one or more $C_{8-12}$ vinyl aromatic monomers which are unsubstituted or substituted by a $C_{1-4}$ alkyl radical or a chlorine atom, from 10 to 40 weight % of one or more $C_{1-4}$ alkyl acrylates or methacrylates, and from 0 to 10 weight % of one or more $C_{3-6}$ ethylenically unsaturated carboxylic acids and anhydrides of $C_{4-8}$ ethylenically unsaturated carboxylic acids; and

(b) graft copolymers comprising from 90 to 60 weight % of a copolymers comprising from 90 to 60 weight % of one or more $C_{8-12}$ vinyl aromatic monomers which are unsubstituted or substituted by a $C_{1-4}$ alkyl radical or a chlorine atom, from 10 to 40 weight % of one or more $C_{1-4}$ alkyl acrylates or methacrylates, and from 0 to 10 weight % of one or more $C_{3-6}$ ethylenically unsaturated carboxylic acids and anhydrides of $C_{4-8}$ ethylenically unsaturated carboxylic acids grafted onto from 10 to 40 weight % of one or more polymers selected from homopolymers of $C_{4-6}$ conjugated diolefins and homo- and co-polymers of $C_{4-8}$ alkyl and hydroxy alkyl esters of $C_{3-6}$ ethylenically unsaturated carboxylic acids which esters form homopolymers having a tg of less than -20°C.

Although the discussion of aromatic monomers has centred on styrene which is preferred, some vinyl aromatic monomers in accordance with the present invention may be $C_{8-12}$ vinyl aromatic monomers which are unsubstituted or substituted by a $C_{1-4}$ alkyl radical or a chlorine atom. Some monomers are styrene, $\alpha$-methyl styrene and chlorostyrene.

Some $C_{3-8}$ alkenyl nitriles are acrylonitrile and methacrylonitrile.

Some $C_{1-4}$ alkyl acrylates or methacrylates are methyl acrylate, ethyl acrylate, butyl acrylate, methyl methacrylate, ethyl methacrylate and butyl methacrylate.

Some polymers of $C_{4-6}$ conjugated diolefins homopolymers of butadiene or copolymers of butadiene and isoprene. A particularly useful polymer of butadiene is a stereospecific polymer having at least 55 weight % preferably more than 90 weight % most preferably at least 95 weight % of the polymer in the cis configuration. Thus a polymer for use in accordance with the present invention is ABS.

The polymers in accordance with the present invention may be copolymers of vinyl aromatic monomers as discussed above with a conjugated diolefin as discussed above. One such polymer is styrene butadiene rubber.

The crosslinked polymer may be one in which the crosslink density is such that the molecular weight of the polymer chain between crosslinks is from 10,000 to 50,0000, preferably from 15,000 to 45,000. The method for determining the molecular weight of the polymer chain between crosslinks is discussed in the paper Physical Characterization of Suspension Crosslinked Polystyrene Particles and Their Sulphonated Products: 1 Nonionic Networks, F.P. Regas and G. N. Valkanas; POLYMER, 1984, Volume 25, February 245, the text of which is hereby incorporated by reference.

In the the present invention the polymer may first be swollen in a organic solvent at temperature and pressure conditions such that the organic solvent remains a liquid at the temperature of treatment. The temperature may be from room temperature up to about 70°C. Preferred solvents are halogenated $C_{1-8}$ alkanes , e.g. dichloroethane, dichloromethane and 1,1,1-trichloroethane.

After the crosslinked polymer is swollen in the solvent the resulting swollen crosslinked vinyl aromatic polymer may optionally be separated from excess solvent. This treatment may be a simple procedure such as decanting the excess solvent or filtering the swollen crosslinked vinyl aromatic polymer from the solvent. However, other more sophisticated methods may be used to separate the swollen crosslinked vinyl aromatic polymer from the solvent such as centrifuging.

The resulting swollen crosslinked vinyl aromatic polymer may then treated with a mixture comprising a trialkyl phosphate and sulfur trioxide in a molar ratio from 1:1 to 1:4. Preferably the molar ratio of trialkyl phosphate to sulfur trioxide is from 1:2 to 1:3. The mole ratio of sulphur trioxide to crosslinked vinyl aromatic polymer to the mix may be from 1:5 to 1:0.5 preferably about 1:1.

Some trialkyl phosphates are tri-$C_{1-4}$ alkyl phosphates. A particularly useful trialkyl phosphate is triethyl phosphate.

Sulfur trioxide is a liquid at temperatures up to about 45°C and has a density of about 1.9. The sulfur trioxide may be used in the form of a solution dissolved in the organic solvent or an organic solvent soluble in or miscible with the organic solvent. The $SO_3$ may be used as 100% (pure $SO_3$) or obtained from an $SO_3$ generator or donor such as oleum. If oleum is used as a generator or donor it is mixed with the solvent and the excess sulfuric acid is separated from the oleum solvent mixture prior to the formation of the $SO_3$-trialkyl phosphate mixture or complex (e.g. the trialkyl phosphate is added to the solution after separation of the $H_2SO_4$). It is believed that the $SO_3$ and trialkyl phosphate form a complex.

The swollen crosslinked vinyl aromatic polymer may be treated with the mixture or complex of trialkyl phosphate and sulfur trioxide for a period of time from 10 minutes to about 5 hours, preferably from about 30 minutes to about 2 hours at a temperature from 30°C to 65°C preferably from about 30°C up to 55°C most preferably from 30°C to 45°C. The swollen crosslinked vinyl aromatic polymer may be added to the trialkyl phosphate and $SO_3$ or a solution of the trialkyl phosphate and $SO_3$. As the polymer is sulphonated it precipitates from the reaction mixture.

After the sulphonation the crosslinked polymer may be separated from the solution of organic solvent and trialkyl phosphate/sulfur trioxide mixture by relatively simple means such as filtering. From a commercial point of view the solvent is recycled to minimize operating costs.

The resulting sulphonated polymer may be neutralized with a fixed alkali such as a hydroxide of a Group I or II metal, ammonium hydroxide, or an organic base such as ethanolamine, or other suitable organic bases in an alcololic medium generally comprising a $C_{1-4}$ alcohol. The salts resulting from the neutralization of the sulphonated crosslinked vinyl aromatic polymer may be removed from the polymer with the following treatment with a $C_{1-4}$ alkanol/water mixture. The process may comprise suspending and/or washing the neutralized sulphonated crosslinked polymer with a $C_{1-4}$ alkanol. The $C_{1-4}$ alkanol may be at least 50, preferably greater than 70 weight % as if too much water is present in the alkanol it will swell the polymer and cause problems with drying the sulphonated crosslinked vinyl aromatic polymer. Preferred alkanols are methanol, ethanol and propanol.

The resulting sulphonated crosslinked vinyl aromatic polymer may then be dried using conventional means and conditions. The dried polymer may be in granular form or as a fine powder.

In some specific applications the sulphonated crosslinked polymer may be washed and dried without prior neutralization as described above.

The present invention will be illustrated by the following non-limiting examples in which unless otherwise specified parts are parts by weight.

Example 1

Crosslinked polystyrene was prepared by dissolving 24 g of polystyrene in 125 g of dichloroethane containing 0.2 g of 1,4-dimethyl-2, 5-dichloromethyl benzene. This solution was added to a mixture of 180 cc of silicone oil and 120cc of dichloroethane at 70°C and 0.3 cc of antimony pentachloride catalyst was added to the resulting solution. The reactants were stirred and heated at 70°C for 5 hours. After that time the reaction mass was cooled and a gel of polystyrene was separated from the silicone oil and dichloroethane. This resulted in approximately 125 g of gel.

125 g of gel produced as described above was swollen in 300 cc of dichloroethane. After an hour of swelling a solution consisting of 39 g of triethyl phosphate and 25 cc of sulfur trioxide (specific gravity about 1.97; molar ratio of 1:3) in 300 cc of dichloroethane was added to the swollen gel. The solutions were permitted to react at room temperature for 1 hour. At the end of this time the sulphonated polymer had precipitated from the dichloroethane in a non-swollen state. The sulphonated polymer was suspended in methanol then neutralized with 50% aqueous KOH.

The resulting polymer was a sulphonated polystyrene hydrogel having a high water uptake (300 g distilled water per gram of polymer or 30,000 weight %).

Example 2

A 165 g of a copolymer of 99.8 weight % of styrene and 0.2 weight % of divinylbenzene was prepared by suspension polymerization using 4 incremental charges of styrene (35.2 g) and divinylbenzene (0.9 g) at 20 minute intervals from the exotherm of the initial charge of polymer. The reaction was initiated using a mixed initiator system comprising 4.2 g of 70% perbenzoyl peroxide and 1.4 g of t-butyl perbenzoate. The polymerization took 5 hours and produced 165 g of beads of crosslinked polystyrene at 98% conversion.

The beads produced above were swollen in 2,800 g of dichloroethane for 2 hours at 30°C. To the swollen beads was added a solution comprising 205 g of triethylphosphate and 132 ml of sulfur trioxide (molar ratio of 1:3) in about 2,400 g of dichloroethane. The reaction mixture was stirred for 1 hour at room temperature. The precipitate resulting from the reaction was filtered and neutralized in 1.3 l of methanol and 200 cc of 50% KOH. The resulting salt is filtered and dried to yield 390 g of product. The salt may be further washed in a 70/30 methanol water mixture. The washed product has a water absorption of 350 - 400 g per gram of polymer.

Example 3

Crosslinked polystyrene was prepared by dissolving 46 g of polystyrene in 125 g of dichloroethane containing 0.12 g of 1,4-dimethyl, 2,5-dichloromethyl benzene. This solution was added to a mixture 180 cc of silicone oil and 120 cc dichloroethane at 70°C and 1.8 cc of 1 M antimony pentachloride in dichloromethane was added. The reactants were stirred and heated at 70°C for 5 hours. After that time the reaction mass was cooled and a gel of polystyrene was separated from the silicone oil and dichloroethane. Approximately 190 g of gel was obtained.

85 g of gel produced as described above was swollen in 450 cc of dichloroethane. After an hour of selling a solution consisting of 24.6 g of triethyl phosphate and 16.5 cc of sulfur trioxide (SG 1.97; molar ratio 1:3) in 150 cc of dichloroethane was added to the swollen gel. The solutions were permitted to react for 10 minutes at room temperature. The temperature was raised to 35°C and reaction allowed to proceed for 2 hours. At the end of this time the sulphonated polymer had precipitated from the dichloroethane in a non-swollen state. The sulphonated polymer was suspended in methanol then neutralized with 50% aqueous KOH. The resulting polymer was sulphonated polystyrene having a high water uptake. Completely purified polymer absorbs 800 g distilled water per gram of polymer (e.g. 80,000 weight % water uptake).

Example 4

A styrene divinyl benzene copolymer containing 0.25% divinyl benzene was prepared according to the following recipe:

"To an aqueous phase that consisted of a solution of 3 g vinyl 523 (polyvinyl alcohol) and 25 g NaCl in 2000 cc of $H_2O$ was added with agitation (300 RPM) 950 g styrene containing 0.5 g divinyl benzene (55%); 4 g 70% benzoyl peroxide and 2 g t-butylperbenzoate. The temperature was raised to 85°C and after 30 minutes at this temperature 5 cc additions from a feed consisting of 50 g styrene and 4 g divinylbenzene (55%) were made every 30 minutes for the first 5 hours. Then every 45 minutes after 6 hours the temperature was raised to 115°C and held there for 1 hour. A total of 14 additions were made. The reaction mixture was cooled. The beads separated and dried."

19.9 g of the above beads were allowed to swell for 2 hours in a solution of 13.2 g triethyl phosphate in 240 cc dichloromethane at 25°C. After 2 hours, a solution of 8.7 cc sulfur trioxide in 120 cc dichloromethane was added with rapid agitation over several minutes. The reaction was stirred at 25°C for 3.5 hours. The sulphonated beads were separated from the solvent and suspended in 400 cc methanol and neutralized with 50% aqueous KOH. The salt was filtered and dried. A sample of the beads which were washed with water and dried had a water absorption in distilled water of 325 g per gram polymer (e.g. 32,500 weight % water uptake).

In the present application's disclosure of the present invention, any numerical value includes the precise value and any value "about" or "essentially" or "substantially" the same as the precise value. The wording of the appended claims and abstract is incorporated into the present description. The words "essential" and "essentially" may be precise values or values substantially the same as precise values, etc.

## Claims

1. A process to produce a sulphonated crosslinked vinyl aromatic polymer having a water up take of not less than 150 times its weight, characterised by

    (a) swelling a crosslinked vinyl aromatic polymer in an organic solvent at temperature and pressure conditions so that said organic solvent remains a liquid;

    (b) optionally separating the swollen insoluble crosslinked vinyl aromatic polymer from said organic solvent;

    (c) contacting for a period of time from 10 minutes to 5 hours at a temperature greater than 30°C said swollen crosslinked vinyl aromatic polymer in said organic solvent with a mixture comprising a trialkyl phosphate and sulfur trioxide in a molar ratio from 1:1 to 1:4 the weight ratio of said sulfur trioxide to said crosslinked polymer being from 1:3 to 1:0.5; and

    (d) separating the resulting sulphonated crosslinked vinyl aromatic polymer from the solution of organic solvent and mixture of said trialkyl phosphate and said sulfur trioxide.

2. The process according to Claim 1, characterised by said contacting of said swollen crosslinked vinyl aromatic polymer with said trialkyl phosphate and said $SO_3$ takes place at a temperature of from 30 to 65°C.

3. The process according to Claim 1 or 2, characterised by neutralising said sulphonated vinyl aromatic polymer with a fixed alkali or an organic base.

4. The process according to Claim 3, characterised by treating said neutralized sulphonated crosslinked vinyl aromatic polymer with a solution of at least 70 weight % of one or more $C_{1-4}$ alkanols.

5. The process according to any one of Claims 1 to 4, characterised by said crosslinked vinyl aromatic polymer has a molecular weight of chains between crosslinks from 10,000 to 50,000.

6. The process according to Claim 5, characterised by said crosslinked vinyl aromatic polymer has a molecular weight of chains between crosslinks from 15,000 to 45,000.

7. The process according to any one of Claims 1 to 6, characterised by said crosslinked vinyl aromatic polymer is selected from :

    (a) homopolymers of $C_{8-12}$ vinyl aromatic monomers which have been crosslinked with a dialkylhalo aromatic compound in the presence of a lewis acid;

    (b) copolymers comprising from 97 to 99.95 weight % of one or more $C_{8-12}$ vinyl aromatic monomers which are unsubstituted or substituted by a $C_{1-4}$ alkyl radical or a chlorine atom and from 3 to 0.05 weight % of a divinyl aromatic monomer;

    (c) copolymers comprising from 10 to 40 weight % of a copolymer comprising 40 to 60 weight % of one or more $C_{8-12}$ vinyl aromatic monomers which are unsubstituted or substituted by a $C_{1-4}$ alkyl radical or a chlorine atom and from 60 to 40 weight % of one or more $C_{3-8}$ alkenyl nitriles which have been grafted onto from 90 to 60 weight % of a homopolymer of one or more $C_{4-6}$ conjugated diolefins;

    (d) copolymers comprising from 40 to 60 weight % of one or more $C_{8-12}$ vinyl aromatic monomers which are unsubstituted or substituted by a $C_{1-4}$ alkyl radical or a chlorine atom and from 60 to 40 weight % of one or more $C_{4-6}$ conjugated diolefins;

    (e) copolymers comprising from 90 to 60 weight % of one or more $C_{8-12}$ vinyl aromatic monomers which are unsubstituted or substituted by a $C_{1-4}$ alkyl radical or a chlorine atom, from 10 to 40 weight % of one or more $C_{1-4}$ alkyl acrylates or methacrylates,and from 0 to 10 weight % of one or more $C_{3-6}$ ethylenically unsaturated carboxylic acids and anhydrides of $C_{4-8}$ ethylenically unsaturated carboxylic acids; and

    (f) graft copolymers comprising from 90 to 60 weight % of a copolymers comprising from 90 to 60 weight % of one or more $C_{8-12}$ vinyl aromatic monomers which are unsubstituted or substituted by a $C_{1-4}$ alkyl radical or a chlorine atom, from 10 to 40 weight % of one or more $C_{1-4}$ alkyl acrylates or methacrylates,and from 0 to 10 weight % of one or more $C_{3-6}$ ethylenically unsaturated carboxylic acids and anhydrides of $C_{4-8}$ ethylenically unsaturated carboxylic acids grafted onto from 10 to 40 weight % of one or more polymers selected from the group consisting of homopolymers of $C_{4-6}$ conjugated diolefins and homo- and co-polymers of $C_{4-8}$ alkyl and hydroxy alkyl esters of $C_{3-6}$ ethylenically unsaturated carboxylic acids which esters form homopolymers having a tg of less than -20°C.

**8.** The process according to any one of Claims 1 to 7, characterised by said organic solvent is an halogenated solvent selected from : halogenated $C_{1-8}$ alkanes.

**9.** The process according to Claim 8, characterised by said solvent is selected from: dichloroethane, dichloromethane and 1,1,1-trichloroethane.

**10.** The process according to any one of Claims 1 to 9, characterised by said swollen crosslinked vinyl aromatic polymer is treated with said mixture for from 30 minutes to 2 hours at a temperature from 30°C to 45°C.

**11.** The process according to any one of Claims 1 to 10, characterised by the molar ratio of said trialkyl phosphate to said sulfur trioxide is from 1:2 to 1:3.

**12.** The process according to any one of Claims 1 to 11, characterised by said trialkyl phosphate is a tri $C_{1-4}$ alkyl phosphate.

**13.** The process according to Claim 12, characterised by said trialkyl phosphate is triethyl phosphate.

**14.** The process according to any one of Claims 1 to 13, characterised by said crosslinked vinyl aromatic polymer is crosslinked polystyrene.

**15.** The process according to any one of Claims 1 to 14, characterised by neutralising said sulphonated crosslinked vinyl aromatic polymer with a fixed alkali or an organic base.

**16.** The process according to Claim 15, characterised by said fixed alkali is selected from: Group I and Group II metal hydroxides.

**17.** The process according to any one of Claims 1 to 16, characterised by treating said separated sulphonated crosslinked vinyl polymer with a solution of at least 70 weight % of one or more $C_{1-4}$ alkanols.

**18.** A polymer, characterised by comprising from 90 to 60 weight % of one or more $C_{8-12}$ vinyl aromatic monomers which are unsubstituted or substituted by a $C_{1-4}$ alkyl radical or a chlorine atom, from 10 to 40 weight % of one or more $C_{1-4}$ alkyl acrylates or methacrylates, and from 0 to 10 weight % of one or more $C_{3-6}$ ethylenically unsaturated carboxylic acids and anhydrides of $C_{4-8}$ ethylenically unsaturated carboxylic acids, which polymer has been sulphonated by a process according to Claim 7.

**19.** A polymer, characterised by being produced according to a process according to any one of Claims 1 to 18.

**20.** A hydrogel, characterised by comprising a polymer as claimed in claim 18 or 19.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-A-1 915 237 (ESSO RESEARCH AND ENGINEERING COMPANY) <br> * page 1 - page 11; claims * <br> --- | 1-20 | C08F8/36 |
| D,A | FR-A-2 354 348 (NATIONAL STARCH AND CHEMICAL CORPORATION) <br> * page 1, line 1 - page 10, line 10; claims 1-4,6-10; examples 2,3 * <br> & US-A-4 448 935 <br> --- | 1-20 | |
| A | US-A-4 415 709 (KLEIN ET AL.) <br> * claims; example 1 * <br> --- | 1-20 | |
| A | EP-A-0 105 634 (UNILEVER PLC) <br> * the whole document * <br> ----- | 1 | TECHNICAL FIELDS SEARCHED (Int. Cl.5) <br><br> C08F |

The present search report has been drawn up for all claims

| Place of search | Date of completion of the search | Examiner |
|---|---|---|
| THE HAGUE | 24 APRIL 1992 | KAUMANN E.K.-H. |